(19) Europäisches Patentamt
European Patent Office
Office européen des brevets

(11) **EP 2 068 593 B1**

(12) **EUROPEAN PATENT SPECIFICATION**

(45) Date of publication and mention
of the grant of the patent:
**07.05.2014 Bulletin 2014/19**

(51) Int Cl.:
***H04W 48/18*** *(2009.01)*

(21) Application number: **08159496.2**

(22) Date of filing: **02.07.2008**

(54) **Method for selecting network interface entity in mobility management entity**

Verfahren zur Auswahl der Netzwerkschnittstelle in einer Mobilitätsverwaltungseinrichtung

Procédé de sélection d'une entité d'interface de réseau dans une entité de gestion de la mobilité

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.12.2007 KR 20070127154**

(43) Date of publication of application:
**10.06.2009 Bulletin 2009/24**

(73) Proprietors:
• **Electronics and Telecommunications Research Institute**
**Daejeon 305-350 (KR)**
• **Samsung Electronics Co., Ltd.**
**Suwon-si, Gyeonggi-do, 443-742 (KR)**

(72) Inventors:
• **Song, Jae-su**
**Daejeon-si (KR)**
• **Baek, Seung-kwon**
**Daejeon-si (KR)**
• **Kim, Won-ik**
**Daejeon-si (KR)**
• **Shin, Yeon-seung**
**Daejeon-si (KR)**
• **Kim, Yeong-jin**
**Daejeon-si (KR)**

(74) Representative: **Betten & Resch**
**Theatinerstrasse 8**
**80333 München (DE)**

(56) References cited:
**EP-A2- 1 526 752     WO-A1-2007/015574**

**Description**

CROSS REFERENCE TO RELATED APPLICATIONS

This application claims priority from Korean Patent Application No. 10-2007-0127154, filed on December 7, 2007.

BACKGROUND

The present invention relates to a method for selecting a network interface entity in a mobility management entity (MME), and more particularly, to a technique in which an MME of a mobile communication system selects a proper network interface entity when a user equipment (UE) performs an initial attach process.
This work was supported by the IT R&D program of Ministry of Information and Communication (MIC)/Institute for Information Technology Advancement (IITA) [2005-S-404-23, Research and development on 3G long-term evolution access system].

DESCRIPTION OF THE RELATED ART

In mobile communication systems, an MME should select a proper network interface entity from among a plurality of network interface entities for connecting between a UE and a network when the UE performs an initial attach process to transmit and receive traffic to and from a packet network.
The MME may be a 3GPP MME, a CDMA2000 base station controller (BSC), or the like.
On the other hand, the network interface entity may be a 3GPP serving gateway (GW), a CDMA2000 packet data serving node (PDSN), or the like.

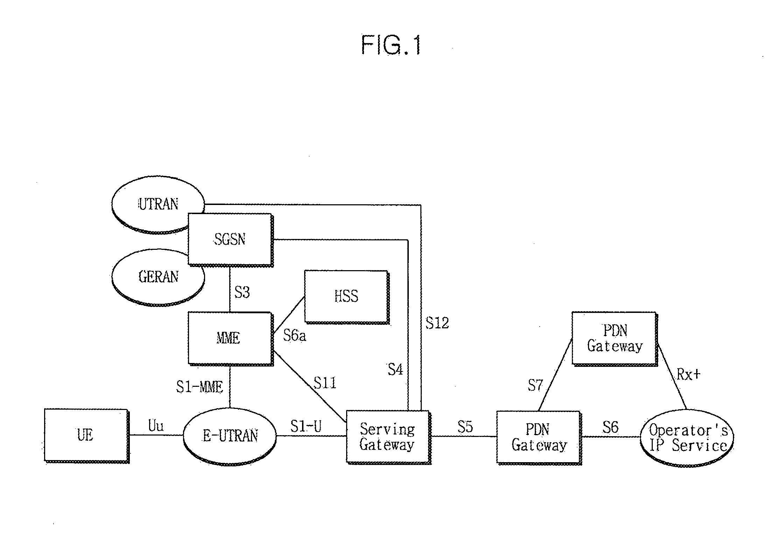

FIG. 1 is a block diagram showing the configuration of a third generation long term evolution (3G LTE) system.
In the 3G LTE system, a packet data transmission is performed between a UE and an operator's Internet protocol (IP) service network via a packet data network (PDN) GW, a serving GW, and a base station (evolved Node-B (eNodeB)) of an evolved universal terrestrial radio access network (E-UTRAN).
Since the 3G LTE system exchanges an IP-based packet, one eNodeB included in the E-UTRAN can interface with a plurality of MMEs or serving GWs and the relationship thereof may be a 1:N or N: 1 interface.
Accordingly, when a specific UE performs an initial attach process and establishes a service session (default IP bearer and dedicated IP bearer), an optimal serving GW needs to be selected from among the plurality of serving GWs connected to the eNodeB for the purpose of load distribution or the like.
The inventor has conducted the research on a technique that can select an optimal network interface entity based on environmental information related to a network interface entity being a traffic transfer path when an MME of a mobile communication system selects a proper network interface entity from among a plurality of network interface entities connecting between a UE and a network.
WO 2007/015574 A1 presents a Multi-Interface Mobility Management (MIMM) client provided on a mobile Multi-Interface Device (MID) to support seamless network connectivity and switching of the MID. The MIMM client communicates with a MIMM Server. The MIMM Server collects information from MIMM Clients and provides information to the MIMM Clients pertaining to the network(s) to which the mobile MID has access, such as information concerning the availability of a network, the quality of network connectivity, etc. The MIMM Client is responsible for determining whether and when a handoff or roaming operation should be initiated by the mobile MID, and which network interface the mobile MID should use after the handoff/roam operation has been completed. The MIMM Client is also responsible for performing mobility-related functions that are required prior and subsequent to the handoff/roam operation. The MIMM Client uses the information received from the MIMM Server to make these determinations.

SUMMARY

The present disclosure provides a method for selecting a network interface entity in a mobility management entity that can select an optimal network interface entity based on environmental information related to the network interface entity including service requirement of a user equipment, processing capacity of the network interface entity, a location of the user equipment, and a network topology.
According to an aspect of the present method, there is provided a method for selecting a network interface entity in a mobility management entity, including: configuring a group including at least one network interface entity satisfying service requirement for a user equipment and processing capacity requirement for the at least one network interface entity in consideration of the service requirement of the user equipment and processing capacity of the at least one network interface entity; and selecting an optimal network interface entity from the at least one network interface entity belonging to the configured group in consideration of a location of the user equipment and a network topology.

The present method may select an optimal network interface entity based on environmental information related to the network interface entity including service requirement of the user equipment, processing capacity of the network interface entity, a location of the user equipment, and a network topology, thereby distributing the load of a mobile communication system and improving the performance thereof.

Additional aspects of the method will be set forth in the description which follows, and in part will be apparent from the description, or may be learned by practice of the method.

It is to be understood that both the foregoing general description and the following detailed description are exemplary and explanatory and are intended to provide further explanation of the method as claimed.

BRIEF DESCRIPTION OF THE DRAWINGS

The accompanying drawings, which are included to provide a further understanding of the invention and are incorporated in and constitute a part of this specification, illustrate exemplary embodiments of the method, and together with the description serve to explain the aspects of the invention.

> FIG. 1 shows the configuration of a 3G LTE system.
> FIG. 2 shows a UE attach procedure of the 3G LTE system.
> FIG. 3 shows an example of a connection of an eNodeB and an MME/serving GW of the 3G LTE system.
> FIG. 4 is a flowchart showing an example of a network interface entity selection method of the MME according to an embodiment of the present method.
> FIG. 5 is a flowchart showing a grouping procedure of the network interface entity selection method of the MME according to an embodiment of the present method.
> FIG. 6 shows an example of an eNodeB cell interfacing with a network interface entity.
> FIG. 7 is a flowchart showing an optimal network interface entity selection procedure of the network interface entity selection method of the MME according to an embodiment of the present method.
> FIG. 8 shows an example of a neighbor cell tree of a network interface entity.

DETAILED DESCRIPTION OF EXEMPLARY EMBODIMENTS

The invention is described more fully hereinafter with reference to the accompanying drawings, in which exemplary embodiments of the method are shown. This invention may, however, be embodied in many different forms and should not be construed as limited to the exemplary embodiments set forth herein. Rather, these exemplary embodiments are provided so that this disclosure is thorough, and will fully convey the scope of the method to those skilled in the art.

In a case of a 3G LTE system, a default IP bearer for IP signalling or traffic is established when a UE performs an initial attach procedure. At this time, an MME selects a serving GW and a PDN GW to interface with a base station (eNodeB) in response to the UE's request, thereby providing the UE with services using the GWs.

The serving GW allocated at the time of the initial attach procedure of the UE is used until a reset operation is performed through a node relocation procedure of a core network (CN) associated with a handover for the UE.

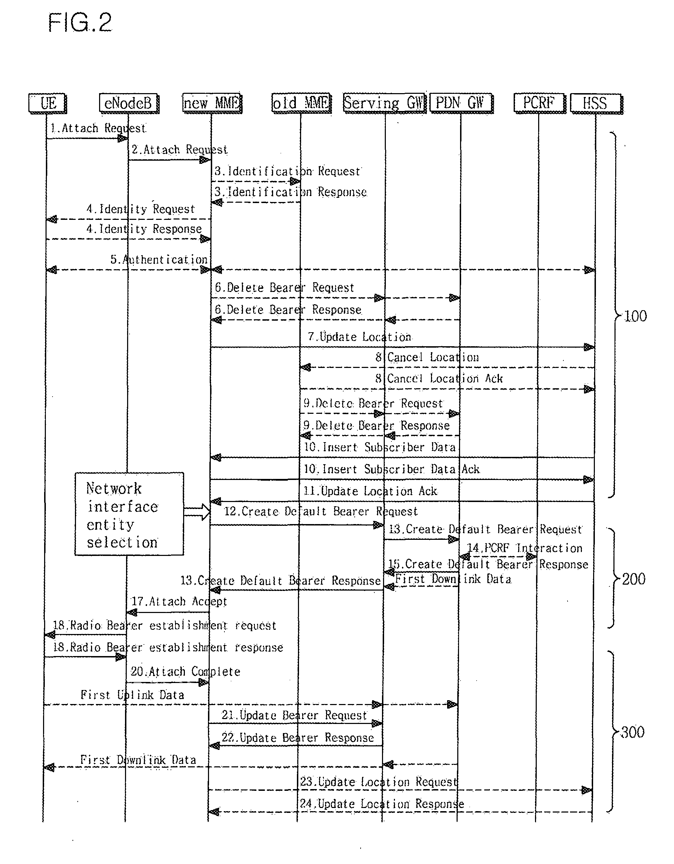

FIG. 2 shows a UE attach procedure of the 3G LTE system, which can be divided into an initial attach request process 100 of the UE, a service session (default IP bearer and dedicated IP bearer) establishment process 200, and a process 300 for completing the initial attach procedure of the UE and providing services. Since a detailed processing procedure for attaching the UE departs from the scope of the present method, a description thereof is omitted.

A network interface entity selection method of the MME according to an embodiment of the present method is performed between the initial attach request process 100 of the UE and the service session establishment process 200.

At this time, the MME may be a 3GPP MME, a CDMA2000 BSC, or the like. On the other hand, the network interface entity may be a 3GPP serving GW, a CDMA2000 PDSN or the like. In the present method, for convenience, the 3G LTE system will be described as an example.

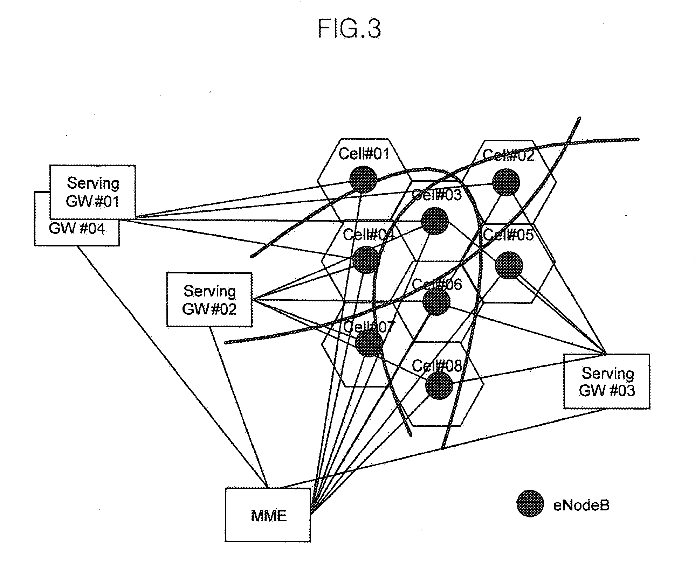

FIG. 3 shows an example of a connection of the eNodeB and the MME/serving GW of the 3G LTE system. The eNodeB located in each cell interfaces with the MMB for a control interface and interfaces with the serving GW for a data interface.

As shown in FIG. 3, one eNodeB can interface with a plurality of MMEs and a plurality of serving GWs according to a system installation method. When an attach procedure for a specific service is performed, a specific MME is selected and a serving GW is selected by the selected MME.

In FIG. 3, it can be seen that a cell #01 interfaces with a serving GW #01 and a serving GW #04 and a cell #02 interfaces with the serving GW #01 and a serving GW #03.

The network interface entity selection method of the MME according to the embodiment of the present method can select an optimal network interface entity based on environmental information related to the network interface entity including service requirement of the UE, processing capacity of the network interface entity, a location of the UE, and a network topology when the MME such as a 3GPP MME or a CDMA2000 BSC selects the network interface entity such as a 3GPP serving GW or CDMA2000 PDSN for a data interface of the eNodeB.

For this, the network interface entity selection method of the MME according to the embodiment of the present method uses environmental information as exemplarily shown in Table 1. This environmental information can be acquired from an operation, administration, and maintenance (OAM) module defining a criterion and method for providing an OAM function of a communication network. The OAM module can serve as an internal or external function entity of the MME.

According to the network interface entity selection method of the MME according to the embodiment of the present method, the MME selects a network interface entity in the UE attach process using the environmental information exemplarily shown in Table 1. At this time, the MME considers two aspects. First, the service requirement of the UE and the processing capacity of the network interface entity should be considered. Second, a minimized network interface entity change should be considered even when the UE to be currently attached moves.

TABLE 1

| Setting Information | Description |
| --- | --- |
| Network interface entity list $L_{sgw}$ | List of network interface entities to be controlled by MME |
| List $L_{sgw.i\_enb.n}$ of network interface entities capable of interfacing with eNodeB | List of network interface entities capable of interfacing with eNodeB n |
| List $L_{sgw.i\_enb.n}$ of eNodeBs capable of interfacing with network interface entity | List of eNodeBs capable of interfacing with network interface entity |
| Neighbor eNodeB list $L_{neighenb.i\_enb.n}$ | List of neighbor cell eNodeBs adjacent to eNodeB n |
| Processing capacity $C_{sgw.i}$ of network interface entity | Total service capacity of network interface entity i |

The MME stores a set of information elements set in Table 1. The capacity information is stored as an information amount capable of being processed. An example of environmental information shown in FIG. 3 is as follows. Here, sgw.n denotes a network interface entity *n* and enb.n denotes an eNodeB *n*.
Network interface entity list:

$L_{sgw}$ = {sgw.1, sgw.2, sgw.3, sgw.4}

List of network interface entities capable of interfacing with an eNodeB 1:

$L_{sgw.i\_enb.n}$ = {sgw.1, sgw.4}

List of eNodeBs capable of interfacing with a network interface entity 1:

$L_{enb.i\_sgw.1}$ = {end.1, enb.2, enb.3, enb.4}

List of eNodeBs of neighbor cells adjacent to an eNodeB 3:

$L_{neighenb.i\_enb.3}$ = {enb.1, enb.2, enb.4, enb.5, enb.6}

Processing capacity of the network interface entity 1:

$C_{sgw.1}$ = c

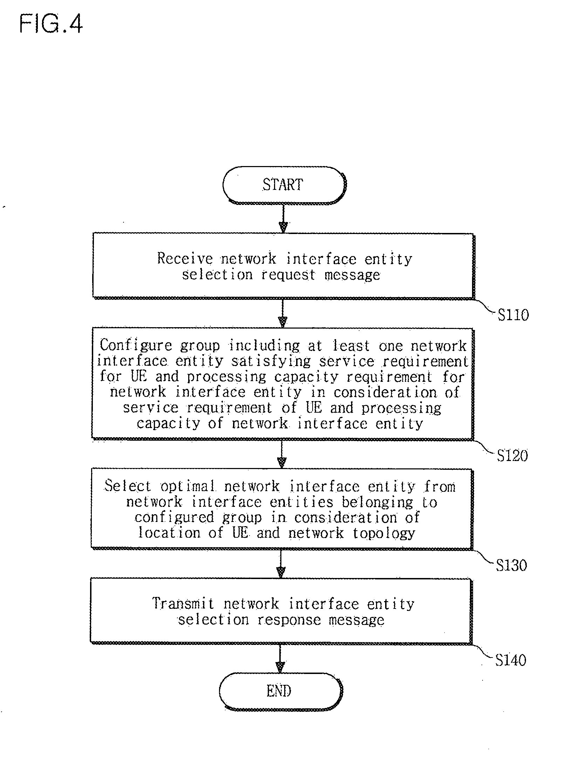

FIG. 4 is a flowchart showing an example of the network interface entity selection method of the MME according to an embodiment of the present method.

In the network interface entity selection method of the MME according to the embodiment of the present method as shown in FIG. 4, the UE creates an initial attach request in an attach process thereof and the MME receives a network interface entity selection request message including eNodeB identification information from the eNodeB in step S 110.

At this time, the network interface entity selection request message can further include resource information $R_{ue.default}$ required for default IP bearer establishment. This resource information required for the default IP bearer establishment is used when establishing a service session in the attach process of the UE.

Upon receiving the network interface entity selection request message in step S110, the MME configures a group including at least one network interface entity satisfying service requirement for the UE and processing capacity requirement for the network interface entity in consideration of the service requirement of the UE and processing capacity of the network interface entity in step S120.

Then, the MME selects an optimal network interface entity from among a plurality of network interface entities included in the group configured in step S120 in consideration of a location of the UE and a network topology in step S130.

When the network interface entity selection is completed in step S 130, the MME transmits a network interface entity selection response message including identification information of the selected network interface entity to the eNodeB which transmitted the network interface entity selection request message in step S140.

According to the embodiment of the present method, the optimal network interface entity can be selected on the basis of environmental information related to the network interface entity including the service requirement of the UE, the processing capacity of the network interface entity, the location of the UE, and the network topology, thereby distributing the load of a mobile communication system and improving the performance thereof.

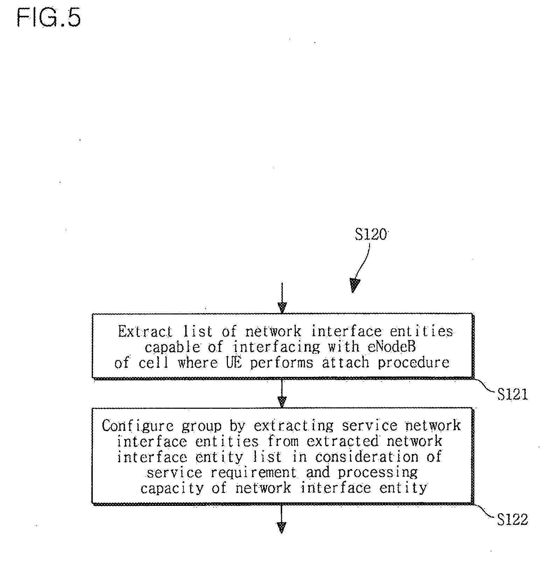

Specifically, in step S120, the group including at least one network interface entity satisfying the service requirement for the UE and the processing capacity requirement for the network interface entity is configured through the process shown in FIG. 5. FIG. 5 is a flowchart showing a grouping procedure of the network interface entity selection method of the MME according to an embodiment of the present method.

First, in step S121, the MME extracts a list $L_{sgw.i\_enb.n}$ of network interface entities capable of interfacing with an eNodeB of a cell where the UE performs an attach procedure. At this time, the list $L_{sgw.i\_enb.n}$ of network interface entities capable of interfacing with the eNodeB of the cell where the UE performs the attach procedure can be extracted from the environmental information exemplarily shown in Table 1.

When there is no interface entity, the attach procedure of the UE is rejected. When there is at least one interface entity, the MME configures the group by extracting service network interface entities from the network interface entity list $L_{sgw.i\_enb.n}$ extracted in step S121 in consideration of the service requirement and the processing capacity of the network interface entity in step S122. A list of service network interface entities belonging to this group is denoted by $L_{sgw.s}$.

At this time, in step S122, the processing capacity of the network interface entity can be computed using a difference between the total processing capacity $C_{sgw}$ of the network interface entity and the allocated bearer capacity $R_{ue.i}$ since the bearer capacity can be detected from bearer allocation information of the currently attached UE. This is defined by the following equation. When the UE creates the attach request, the service capacity of the network interface entity (or the processing capacity of the network interface entity) is denoted by $C_{sgw.c}$, band information allocated to the UE **i** (or allocated bearer capacity) is denoted by $R_{ue.i}$, and the number of attached UEs is denoted by **n.**

$$C_{sgw.c} = C_{sgw} - \sum_{i=0}^{n} R_{ue.i}$$

On the other hand, since only quality of service (QoS) information for default IP bearer establishment is provided when the UE performs the initial attach procedure, the group can be configured by extracting the service network interface entity list $L_{sgw.s}$ in consideration of an estimated value λ required for dedicated IP bearer establishment to be created later.

That is, groups are configured by a set of service network interface entity lists $L_{sgw.s}$ satisfying the condition of the following equation.

$$C_{sgw.c} \geq R_{ue.default} + \lambda$$

Since the UE has mobility, the performance of the overall system can be enhanced by selecting a network interface entity having the lowest relocation possibility in consideration of the handover. That is, if the UE has the same mobility probability for cells, the probability of relocation of the network interface entity is lowered when the number of neighbor cells adjacent to the cell in which the attach procedure is performed is large.

To satisfy this condition, the optimal network interface entity is selected by performing the following detailed operation in step S130.

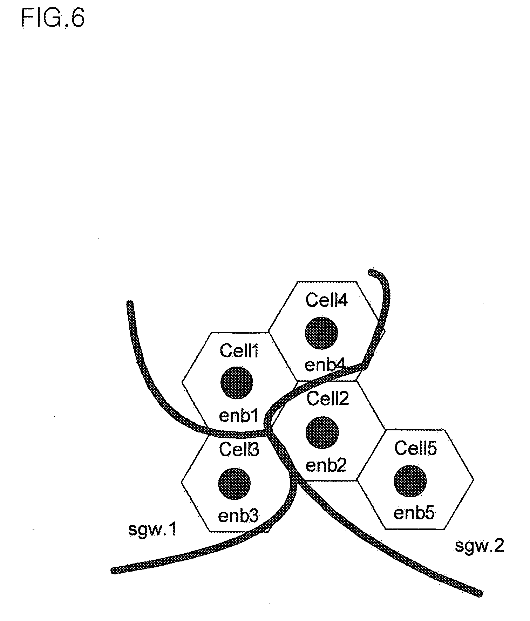

It is assumed that the group of members of network interface entities satisfying the service requirement of the UE and the processing capacity of the network interface entity in step S120 is $L_{sgw.s}$ = {sgw.1, sgw.2} and regions of the network interwork entities sgw.1 and sgw.2 are the same as shown in FIG. 6.

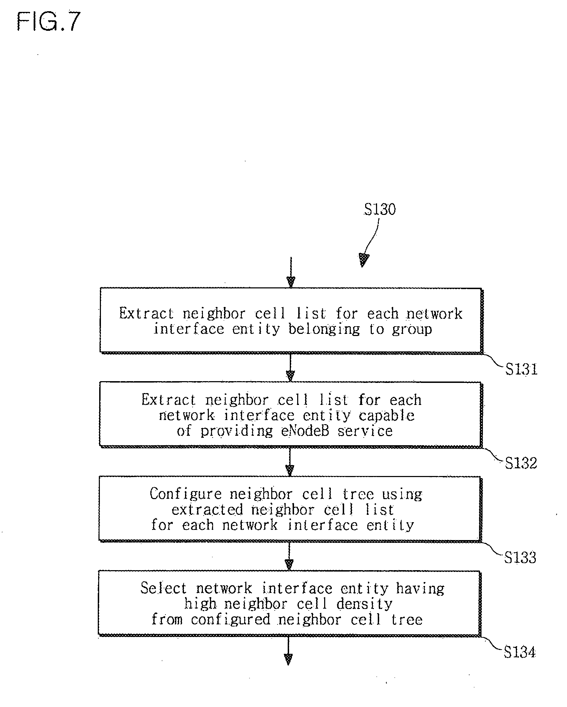

FIG. 7 is a flowchart showing an optimal network interface entity selection procedure of the network interface entity selection method of the MME according to an embodiment of the present method.

In step S131, the MME extracts a neighbor cell list $L_{neighenb.i\_enb.n}$ for each network interface entity included in the group configured in step S120. At this time, the neighbor cell list $L_{neighenb.i\_enb.n}$ can be extracted from the environmental information exemplarily shown in Table 1. For example, referring to FIG. 6, $L_{neighenb.i\_enb.1}$ = {enb.2, enb.3, enb.4}.

Then, the MME extracts a neighbor cell list $\mu L_{sgw.i\_enb.n}$ for each network interface entity capable of providing the eNodeB service in step S132. At this time, since the neighbor cell list for each network interface entity capable of providing an eNodeB service is cells included in both a list of eNodeBs capable of interfacing with a corresponding network interface entity and a list of cell eNodeBs adjacent to a corresponding cell eNodeB, the neighbor cell lists can be extracted from the following equation.

$$\mu L_{sgw.i\_enb.n} = \left( L_{enb.j\_sgw.m} \bigcap L_{enb.i\_sgw.n} \right)$$

For example, referring to FIG. 6, $\mu L_{sgw.2\_enb.1}$ = {enb.2, enb.4} and $\mu L_{sgw.1\_enb.1}$ = {enb.2, enb.4, enb.5}.

Then, in step S 133, the MME configures a neighbor cell tree using the neighbor cell list for each network interface entity extracted in step S132.

At this time, the neighbor cell tree is configured by setting a cell eNodeB to which the UE is attached to a root node, setting a neighbor cell eNodeB of the root node to a child node, forming a relation between parent and child nodes, and edge connecting between the parent and child nodes.

Moreover, the neighbor cell tree has an n-th depth by repeating an operation for setting an eNodeB of a neighbor cell of the child node to a child node of a corresponding child node, forming a relation between parent and child nodes, and edge connecting between the parent and child nodes. On the other hand, when the neighbor cell of the child node is a parent node or a sibling node, an edge connection is not made.

The n-th depth indicates an adjacency relation between a cell eNodeB to which the UE is attached and a neighbor cell. That is, it can be seen that the child node connected to the root node is adjacent to the cell to which the UE is attached and child nodes connected to the child node are adjacent to each other in a state in which one or more cells are present therebetween.

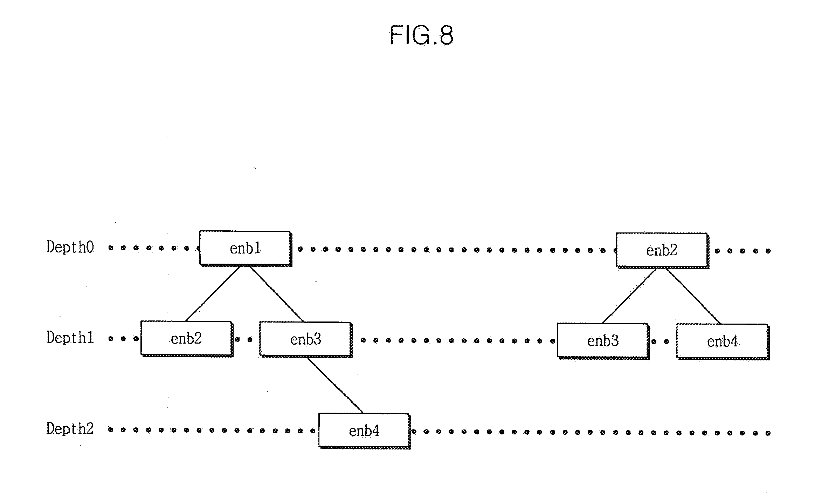

Accordingly, the density of neighbor cells of a cell eNodeB to perform the attach process can be detected from n-th depth information. FIG. 8 shows an example of a neighbor cell tree of a network interface entity.

In step S134, the MME selects a network interface entity having high neighbor cell density from the neighbor cell tree configured in step S 133.

The neighbor cell density affects the mobility between network interface entities for which the UE can perform the attach procedure, and can be computed using the number of neighbor cells considering the network topology. The following equation is an example of an equation for computing the neighbor cell density $D_{sgw.i\_enb.n}$. In the equation, $N_k$ is the number of neighbor cells having a k-th depth and an index $a$ is a value of $0 < a < 1$.

$$D_{sgw.i\_enb.n} = (1-\alpha)N_1 + \alpha(1-\alpha)N_2 + \alpha^2(1-\alpha)N_3 + ... + \alpha^k(1-\alpha)N_{k+1}$$

Since the probability of occurrence of a relocation procedure of a network interface entity having high neighbor cell density is low even when the UE moves, a network interface entity of the highest neighbor cell density is finally selected to be used for the attach procedure and service of the UE.

According to the embodiment of the present method, when a large number of network interface entities interface with the MME of the mobile communication system, the overall system load can be distributed by selecting an optimal network interface entity on the basis of environmental information related to the network interface entity including service requirement of a UE, processing capacity of the network interface entity, a location of the UE, and a network topology. A relocation procedure of the network interface entity can be minimized by selecting the network interface entity associated with a large number of neighbor cells in consideration of the neighbor cell density of a service cell.

As apparent from the above description, the present invention can be used for technical fields in which an MME of a mobile communication system selects a proper network interface entity and application fields thereof.

It will be apparent to those skilled in the art that various modifications and variations can be made in the present invention without departing from the scope of the invention. Thus, it is intended that the present invention covers the modifications and variations of this invention provided they come within the scope of the appended claims and their equivalents.

**Claims**

1. A method for selecting a network interface entity in a mobility management entity, comprising:

   configuring a group including at least one network interface entity satisfying service requirement for a user equipment and processing capacity requirement for the at least one network interface entity in consideration of the service requirement of the user equipment and processing capacity of the at least one network interface entity (S120); and
   selecting an optimal network interface entity from the at least one network interface entity belonging to the configured group in consideration of a location of the user equipment and a network topology (S130), wherein the selecting of the optimal network interface entity comprises:

      extracting a neighbor cell list for each network interface entity belonging to the configured group (S131);
      extracting a neighbor cell list for each network interface entity capable of providing an eNodeB service (S132);
      configuring a neighbor cell tree using the extracted neighbor cell list for each network interface entity (S133); and
      selecting a network interface entity having high neighbor cell density from the configured neighbor cell tree (S134).

2. The method of claim 1, wherein the configuring of the group comprises:

   extracting a list of network interface entities capable of interfacing with an eNodeB of a cell where the user equipment performs an attach procedure (S121); and
   configuring the group by extracting network interface entities capable of providing a service from the extracted network interface entity list in consideration of the service requirement of the user equipment and the processing capacity of the at least one network interface entity (S122).

3. The method of claim 2, wherein the processing capacity of the at least one network interface entity is computed using a difference between total processing capacity of the at least one network interface entity and preset bearer capacity.

4. The method of claim 3, wherein the processing capacity of the at least one network interface entity is computed by further reflecting an estimated value required for dedicated IP bearer establishment to be created later.

5. The method of claim 1, wherein the extracted neighbor cell list for each network interface entity capable of providing the eNodeB service comprises cells included in both a list of eNodeBs capable of interfacing with a corresponding network interface entity and a list of cell eNodeBs neighboring to a corresponding cell eNodeB.

6. The method of claim 1, wherein the neighbor cell tree is configured by setting a cell eNodeB to which the user equipment is attached to a root node, setting a neighbor cell eNodeB of the root node to a child node, forming a relation between parent and child nodes, and edge connecting between the parent and child nodes.

7. The method of claim 6, wherein the neighbor cell tree is configured by further setting an eNodeB of a neighbor cell of the child node to a child node of a corresponding child node, forming a relation between parent and child nodes, and edge connecting between the parent and child nodes.

8. The method of claim 7, wherein when the neighbor cell of the child node is a parent node or a sibling node, an edge connection is not made.

9. The method of claims 1, further comprising:

   receiving a network interface entity selection request message including eNodeB identification information from an eNodeB in an attach process of the user equipment.

10. The method of claim 9, further comprising:

> transmitting a network interface entity selection response message including selected network interface entity identification information to the eNodeB which transmitted the network interface entity selection request message when network interface entity selection is completed.

11. The method of claim 9, wherein the network interface entity selection request message further comprises resource information required for default IP bearer establishment.

**Patentansprüche**

1. Verfahren zum Auswählen einer Netzwerkschnittstelleneinheit in einer Mobilitätmanagementeinheit, umfassend:

> Konfigurieren einer Gruppe, die zumindest eine Netzwerkschnittstelleneinheit enthält, die eine Dienstanforderung für ein Endgerät und eine Verarbeitungskapazitätsanforderung für die zumindest eine Netzwerkschnittstelleneinheit unter Berücksichtigung der Dienstanforderung des Endgeräts und Verarbeitungskapazität von der zumindest einen Netzwerkschnittstelleneinheit (S 120) erfüllt;
> Auswählen einer optimalen Netzwerkschnittstelleneinheit von der zumindest einen Netzwerkschnittstelleneinheit, die zu der konfigurierten Gruppe gehört, unter Berücksichtigung eines Ortes des Endgerät und einer Netzwerktopologie (S130), wobei das Auswählen der optimalen Netzwerkschnittstelleneinheit umfasst:
>
>> Extrahieren einer Liste von Nachbarzellen für jede Netzwerkschnittstelleneinheit, die zu der konfigurierten Gruppe (S131) gehört;
>> Extrahieren einer Liste von Nachbarzellen für jede Netzwerkschnittstelleneinheit, die fähig ist, einen eNodeB Service (S132) bereitzustellen;
>> Konfigurieren eines Baums von Nachbarzellen unter Verwendung der extrahierten Nachbarzellenliste für jede Netzwerkschnittstelleneinheit (S133); und
>> Auswählen, aus dem konfigurierten Baum von Nachbarzellen, einer Netzwerkschnittstelleneinheit, die eine hohe Nachbarzellendichte hat (S134).

2. Verfahren nach Anspruch 1, wobei das Konfigurieren der Gruppe umfasst:

> Extrahieren einer Liste von Netzwerkschnittstelleneinbeiten, die fähig sind sich über eine Schnittstelle mit einem eNodeB einer Zelle zu verbinden, wobei das Endgerät eine Bindeprozedur (S 121) ausführt; und
> Konfigurieren der Gruppe durch Extrahieren von Netzwerkschnittstelleneinheiten, die fähig sind, einen Dienst von der Liste der extrahierten Netzwerkschnittstellen bereitzustellen, unter Berücksichtigung der Dienstanforderung des Endgeräts und der Verarbeitungskapazität der zumindest einen Netzwerkschnittstelleneinheit (S122).

3. Verfahren nach Anspruch 2, wobei die Verarbeitungskapazität der zumindest einen Netzwerkschnittstelleneinheit unter Verwendung eines Unterschieds zwischen einer gesamten Verarbeitungskapazität der zumindest einen Netzwerkschnittstelleneinheit und einer gegenwärtigen Bearer-Kapazität berechnet wird.

4. Verfahren nach Anspruch 3, wobei die Verarbeitungskapazität der zumindest einen Netzwerkschnittstelleneinheit durch weiteres Reflektieren eines geschätzten Wertes, der zum Aufbau eines dedizierten IP Bearers benötigt wird, berechnet wird.

5. Verfahren nach Anspruch 1, wobei die extrahierte Liste von Nachbarzellen für jede Netzwerkschnittstelleneinheit, die fähig ist, den eNodeB Dienst bereitzustellen, Zellen umfasst, die sowohl in einer Liste von eNodeBs sind, die fähig sind, sich über eine Schnittstelle mit einer entsprechenden Netzwerkschnittstelleneinheit zu verbinden, als auch in einer Liste von Zellen-eNodeBs, die benachbart zu einem entsprechenden Zellen-eNodeB sind.

6. Verfahren nach Anspruch 1, wobei der Baum von Nachbarzellen konfiguriert wird durch Setzen eines Zellen-eNodeBs, an den das Endgerät gebunden ist, als Wurzelknoten, Setzen eines Nachbarzellen-eNodeBs des Wurzelknoten als einen Kindknoten, Bilden einer Beziehung zwischen Eltern- und Kindknoten und einer Kante, die zwischen den Eltern- und Kindknoten verbindet.

**7.** Verfahren nach Anspruch 6, wobei der Baum von Nachbarzellen konfiguriert wird durch weiteres Setzen eines eNodeB einer Nachbarzelle des Kindknotens als einen Kindknoten eines entsprechenden Kindknotens und Bilden einer Beziehung zwischen Eltern- und Kindknoten und einer Kante, die zwischen den Eltern- und Kindknoten verbindet.

**8.** Verfahren nach Anspruch 7, wobei eine Kantenverbindung nicht hergestellt wird, wenn die Nachbarzelle des Kindknotens ein Elternknoten oder ein Zwillingsknoten ist.

**9.** Verfahren nach Anspruch 1, weiter umfassend:

Empfangen einer Anfragenachricht zur Auswahl einer Netzwerkschnittstelleneinheit, die eNodeB-Identifikationsinformation von einem eNodeB in dem Bindeprozess des Endgeräts enthält.

**10.** Verfahren nach Anspruch 9, ferner umfassend:

Senden einer Antwortnachricht zur Auswahl einer Netzwerkschnittstelleneinheit, die Identifikationsinformation einer ausgewählten Netzwerkschnittstelleneinheit enthält, an den eNodeB, welcher die Anfragenachricht zur Auswahl einer Netzwerkschnittstelleneinheit gesendet hat, wenn die Auswahl einer Netzwerkschnittstelleneinheit beendet ist.

**11.** Verfahren nach Anspruch 9, wobei die Anfragenachricht zur Auswahl einer Netzwerkschnittstelleneinheit ferner Information über Ressourcen, die für den Aufbau eines Standard IP Bearer benötigt werden, umfasst.

**Revendications**

**1.** Procédé pour sélectionner une entité d'interface réseau dans une entité de gestion de la mobilité, comprenant :

la configuration d'un groupe comprenant au moins une entité d'interface réseau satisfaisant à une exigence de service pour un équipement d'utilisateur et à une exigence de capacité de traitement pour la au moins une entité d'interface réseau en considération de l'exigence de service de l'équipement utilisateur et de la capacité de traitement de la au moins une entité d'interface réseau (S120) ; et
la sélection d'une entité d'interface réseau optimale à partir de la au moins une entité d'interface réseau appartenant au groupe configuré en considération d'une localisation de l'équipement d'utilisateur et d'une topologie de réseau (S130), où la sélection de l'entité d'interface réseau optimale comprend :

l'extraction d'une liste de cellules voisines pour chaque entité d'interface réseau appartenant au groupe configuré (S131) ;
l'extraction d'une liste de cellules voisines pour chaque entité d'interface réseau capable de fournir un service eNodeB (S132) ;
la configuration d'un arbre de cellules voisines en utilisant la liste de cellules voisines extraite pour chaque entité d'interface réseau (S133) ; et
la sélection d'une entité d'interface réseau ayant une densité de cellules voisines élevée à partir de l'arbre de cellules voisines configuré (S134).

**2.** Procédé selon la revendication 1, dans lequel la configuration du groupe comprend :

l'extraction d'une liste d'entités d'interface réseau capables de s'interfacer avec un eNodeB d'une cellule où l'équipement d'utilisateur effectue une procédure de rattachement (S121) ; et
la configuration du groupe en extrayant des entités d'interface réseau capables de fournir un service de la liste d'entités d'interface réseau extraite en considération de l'exigence de service de l'équipement utilisateur et de la capacité de traitement de la au moins une entité d'interface réseau (S122).

**3.** Procédé selon la revendication 2, dans lequel la capacité de traitement de la au moins une entité d'interface réseau est calculée en utilisant une différence entre la capacité de traitement totale de la au moins une entité d'interface réseau et la capacité de support préétablie.

**4.** Procédé selon la revendication 3, dans lequel la capacité de traitement de la au moins une entité d'interface réseau est calculée en réfléchissant en outre une valeur estimée requise pour l'établissement de support IP dédié devant être créé ultérieurement.

5. Procédé selon la revendication 1, dans lequel la liste de cellules voisines extraite pour chaque entité d'interface réseau capable de fournir le service eNodeB comprend des cellules comprises à la fois dans une liste d'eNodeB capables de s'interfacer avec une entité d'interface réseau correspondante et dans une liste d'eNodeB de cellule voisins d'un eNodeB de cellule correspondant.

6. Procédé selon la revendication 1, dans lequel l'arbre de cellules voisines est configuré en établissant un eNodeB de cellule auquel l'équipement d'utilisateur est rattaché à un noeud racine, en établissant un eNodeB de cellule voisine du noeud racine à un noeud enfant, en formant une relation entre des noeuds parent et enfant, et en effectuant une connexion périphérique entre les noeuds parent et enfant.

7. Procédé selon la revendication 6, dans lequel l'arbre de cellules voisines est configuré en établissant en outre un eNodeB d'une cellule voisine du noeud enfant à un noeud enfant d'un noeud enfant correspondant, en formant une relation entre des noeuds parent et enfant, et en effectuant une connexion périphérique entre les noeuds parent et enfant.

8. Procédé selon la revendication 7, dans lequel, lorsque la cellule voisine du noeud enfant est un noeud parent ou un noeud frère, une connexion périphérique n'est pas effectuée.

9. Procédé selon la revendication 1, comprenant en outre :

   la réception d'un message de demande de sélection d'entité d'interface réseau comprenant des informations d'identification eNodeB en provenance d'un eNodeB dans un processus de rattachement de l'équipement d'utilisateur.

10. Procédé selon la revendication 9, comprenant en outre :

   la transmission d'un message de réponse de sélection d'entité d'interface réseau comprenant des informations d'identification d'entité d'interface réseau sélectionnée à l'eNodeB qui a transmis le message de demande de sélection d'entité d'interface réseau lorsque la sélection d'entité d'interface réseau est achevée.

11. Procédé selon la revendication 9, dans lequel le message de demande de sélection d'entité d'interface réseau comprend en outre des informations de ressource requises pour l'établissement de support IP par défaut.

# FIG.1

EP 2 068 593 B1

EP 2 068 593 B1

# FIG.2

FIG.3

FIG.4

```
                    ┌─────────────┐
                    │    START    │
                    └──────┬──────┘
                           │
                           ▼
    ┌──────────────────────────────────────────┐
    │       Receive network interface entity    │
    │          selection request message        │
    └──────────────────────────────────────────┘
                           │                      ～S110
                           ▼
    ┌──────────────────────────────────────────┐
    │  Configure group including at least one network │
    │  interface entity satisfying service requirement │
    │  for UE and processing capacity requirement for  │
    │   network interface entity in consideration of   │
    │     service requirement of UE and processing     │
    │      capacity of network interface entity        │
    └──────────────────────────────────────────┘
                           │                      ～S120
                           ▼
    ┌──────────────────────────────────────────┐
    │  Select optimal network interface entity from │
    │   network interface entities belonging to     │
    │     configured group in consideration of      │
    │       location of UE and network topology     │
    └──────────────────────────────────────────┘
                           │                      ～S130
                           ▼
    ┌──────────────────────────────────────────┐
    │        Transmit network interface entity  │
    │          selection response message       │
    └──────────────────────────────────────────┘
                           │                      ～S140
                           ▼
                    ┌─────────────┐
                    │     END     │
                    └─────────────┘
```

FIG.5

S120

Extract list of network interface entities
capable of interfacing with eNodeB
of cell where UE performs attach procedure

S121

Configure group by extracting service network
interface entities from extracted network
interface entity list in consideration of
service requirement and processing
capacity of network interface entity

S122

FIG.6

# FIG.7

S130

Extract neighbor cell list for each network
interface entity belonging to group

~S131

Extract neighbor cell list for each
network interface entity capable
of providing eNodeB service

~S132

Configure neighbor cell tree using
extracted neighbor cell list
for each network interface entity

~S133

Select network interface entity having
high neighbor cell density
from configured neighbor cell tree

~S134

# FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070127154

- WO 2007015574 A1